(19) Europäisches Patentamt
European Patent Office
Office européen des brevets

(11) Veröffentlichungsnummer: **0 016 430**
**A1**

(12) # EUROPÄISCHE PATENTANMELDUNG

(21) Anmeldenummer: **80101336.8**

(22) Anmeldetag: **14.03.80**

(51) Int. Cl.³: **C 01 B 21/096**

(30) Priorität: **24.03.79 DE 2911665**

(43) Veröffentlichungstag der Anmeldung:
**01.10.80 Patentblatt 80/20**

(84) Benannte Vertragsstaaten:
**DE FR GB**

(71) Anmelder: **HOECHST AKTIENGESELLSCHAFT**
**Zentrale Patentabteilung Postfach 80 03 20**
**D-6230 Frankfurt/Main 80(DE)**

(72) Erfinder: **Gräser, Reinhold, Dr.**
**Loreleistrasse 81**
**D-6230 Frankfurt am Main 80(DE)**

(72) Erfinder: **Semmler, Hans-Joachim, Dr.**
**Schwedenstrasse 41**
**D-6203 Hochheim am Main(DE)**

(72) Erfinder: **Russow, Jürgen, Dr.**
**Loreleistrasse 89**
**D-6230 Frankfurt am Main 80(DE)**

(54) **Verfahren zur Herstellung von Ammoniumsulfamat und Ammoniumnitrilotrisulfonat.**

(57) Aus Ammoniak, Schwefeldioxid und $N_2O_3$ läßt sich Ammoniumnitrilotisulfonat herstellen, indem man aus Ammoniak, Schwefeldioxid eine wässrige Ammoniumsulfit-Lösung mit einem pH-Wert zwischen 5 und 7,5 herstellt, und diese mit $N_2O_3$ reagieren läßt. Das ausfallende Ammonium-Salz der Nitrilotrisulfonsäure wird isoliert. Erfindungsgemäß erfolgt die Umsetzung mit $N_2O_3$ bei Temperaturen unter 30°C. Das anfallende Ammoniumnitrilotrisulfonat läßt sich bei erhöhter Temperatur und unter Druck mit Ammoniak zu Ammoniumsulfamat umsetzen.

EP 0 016 430 A1

BEZEICHNUNG GEÄNDERT
siehe Titelseite



HOECHST AKTIENGESELLSCHAFT HOE 79/F 074 Dr.SP/a

Verfahren zur Herstellung von Ammoniumsulfamat

Die vorliegende Erfindung betrifft ein Verfahren zur Herstellung von Ammoniumsulfamat aus Ammoniak, Schwefeldioxid und nitrosen Gasen. Aus der DE-AS 1 767 201 ist ein Verfahren zur Herstellung von Amidosulfonsäure bekannt, bei dem man eine wäßrige, ammoniakalische Ammoniumsulfitlösung bei einem pH-Wert zwischen 5,0 und 7,5 mit gasförmigen Stickoxiden bei erhöhter Temperatur umsetzt, man die gebildeten Ammoniumsalze der Nitrilotrisulfonsäure, der der Imidosulfonsäure und der Amidosulfonsäure abtrennt und durch starke Säuren in Amidosulfonsäure überführt.

Dabei können Synthese und Hydrolyse des Nitrilotrisulfonates durch folgende Gleichungen wiedergegeben werden:

$$N_2O_3 + 6NH_4SO_3H \longrightarrow 2N(SO_3NH_4)_3 + 3H_2O$$

$$N(SO_3NH_4)_3 + H_2O \longrightarrow NH(SO_3NH_4)_2 + NH_4SO_4H$$

$$NH(SO_3NH_4)_2 + H_2O \longrightarrow NH_2SO_3NH_4 + NH_4SO_4H$$

Es ist zu erkennen, daß bei der Hydrolyse von Ammonium-nitrilotrisulfonat oder Ammoniumimidodisulfonat jeweils pro Mol nur 1 Mol Amidosulfonsäure gebildet wird, daß also bei der Hydrolyse 2/3 bzw. 1/2 des Schwefels dieser Verbindungen in wertloses Hydrogensulfat übergeht.

Es bestand daher die Aufgabe ein Verfahren zu finden, das eine bessere Ausnutzung des Schwefelanteils von Ammonium-nitrilotrisulfonat oder Ammoniumimidodisulfonat gewährleistet.

Es wurde nun ein Verfahren zur Herstellung von Ammoniumsulfamat aus Ammoniak, Schwefeldioxid und $N_2O_3$ gefunden, bei dem man aus Ammoniak und Schwefeldioxid eine Ammoniumsulfitlösung mit einem pH-Wert zwischen 5 und 7,5 herstellt, man diese mit $N_2O_3$ zu Ammonium-nitrilotrisulfonat umsetzt, das auch noch Ammoniumimidodisulfonat enthalten kann, man das abgeschiedene Salz isoliert und dann mit Ammoniak bei erhöhter Temperatur und erhöhtem Druck zu Ammoniumsulfamat umsetzt, das dadurch gekennzeichnet ist, daß die Umsetzung der Ammoniumsulfitlösung mit dem $N_2O_3$ bei Temperaturen unter 30°C erfolgt.

Die Umwandlung von wasserfreiem Ammonium-nitrilotrisulfonat in Ammoniumsulfamat durch Reaktion mit Ammoniak bei erhöhter Temperatur und erhöhtem Druck ist bekannt. (Vgl. DE-PS 1 442 976, US-PS 3 484 193 oder US-PS 3 404 949).

An Stelle von $N_2O_3$ kann man auch Gemische von NO und $NO_2$ einsetzen, wobei Gehalte an $NO_2$ von 30 bis 60 Volumenprozent, bezogen auf die Summe von NO und $NO_2$, bevorzugt sind.

Vorteilhaft wird die Umsetzung mit $N_2O_3$ bei Temperaturen oberhalb 0°C aber unterhalb 30°C durchgeführt. Bei Temperaturen über 30°C nimmt die Menge an ausfallendem Ammoniumsalz ab. Ferner bildet sich bei höheren Temperaturen ein anderes Ammoniumsalz als bei Temperaturen unter 30°C.

Dies läßt sich auch durch unterschiedliche Debye-Scherrer-Diagramme nachweisen. Das unterhalb von 30°C gebildete Produkt ist stabil, während ein Produkt das bei höheren Temperaturen gewonnen wurde, meist Kristallwasser enthält und sich so leicht unkontrolliert zersetzt, wobei das Wasser unter Hydrolyse reagiert.

Da nur 5,8 Gewichtsprozent Wasser nötig sind um Ammoniumnitrilosulfonat quantitativ zu hydrolysieren, können bereits geringe Wassermengen einen erheblichen Einfluß auf die Ausbeute an Ammoniumsulfamat ausüben.

Der Wassergehalt des nutschenfeuchten Ammoniumsalzes, das bei der Reaktion mit $N_2O_3$ anfällt, beträgt im allgemeinen 0,2 bis 2 Gewichtsprozent.

Es ist vorteilhaft, das isolierte Ammonium-nitrilotrisulfonat ohne Zwischenlagern sofort weiterzuverarbeiten, da bei längerem Stehen in geringem Maße Hydrolyse stattfinden kann.

Eine Apparatur zur Herstellung des Ammonium-nitrilotrisulfonats ist bereits in der DE-AS 1 767 201 angegeben. Eine etwas modifizierte Apparatur ist in Beispiel 1 der vorliegenden Anmeldung beschrieben.

Bei kurzen Verweilzeiten der Ammoniumsulfitlösung in dem Behälter, in den auch die nitrosen Gase eingeleitet werden, erfolgt die Kristallisation des Ammonium-nitrilotrisulfonates aus der Sulfitlösung teilweise erst nachdem diese den Behälter wieder verlassen hat. In diesem Fall ist es sinnvoll Kristallisatoren nachzuschalten, deren Temperatur vorteilhafter Weise zwischen 0 und 28°C gehalten wird.

Vorrichtungen und Verfahren zur Umwandlung von Nitrilotrisulfonat mit Ammoniak zu Ammoniumsulfamat sind bereits bekannt. Für diese Umsetzung sind Reaktionstemperaturen von 170-280°C, insbesondere 200-220°C, und Drucke von 5-50 bar, insbesondere 5 bis 11 bar, vorteilhaft.

Wie oben erwähnt, enthält das eingesetzte Ammonium-nitrilotrisulfonat im allgemeinen sehr wenig Wasser; es braucht dann nicht getrocknet werden. Ist es jedoch feucht, so kann es nach Waschen mit Ammoniakwasser und Aceton bei ca. 80°C getrocknet werden. Für die Weiterverarbeitung wird es in eine Ammoniumsulfamat-Schmelze eingetragen, suspendiert und unter erhöhtem Ammoniakdruck umgesetzt. Dabei bildet die benutzte Ammoniumsulfamat-Schmelze gleichzeitig das Ergebnis der Druckreaktion.

Die Umsetzung des Nitrilotrisulfonats mit Ammoniak ist eine Gleichgewichtsreaktion, die durch folgende Gleichungen dargestellt werden kann.

$$N(SO_3NH_4)_3 + NH_3 \longrightarrow HN(SO_3NH_4)_2 + NH_2SO_3NH_4$$

$$NH(SO_3NH_4)_2 + NH_3 \longrightarrow NH_2SO_3NH_4$$

Bei dieser Druckreaktion kann man so verfahren, daß man Ammoniak nur in dem Maß in den Druckreaktor eindrückt, indem es verbraucht wird. Man wird ferner kleine Anteile des Ammoniaks kontinuierlich oder diskontinuierlich aus dem Behälter entfernen, um zu verhindern, daß sich größere Mengen an Inertgasen ($N_2$, $CH_4$, Argon und evtl. $H_2$) im Behälter ansammeln. Diese diskontinuierliche oder kontinuierliche Entspannung ist auch sinnvoll bei der Herstellung von Ammonium-Sulfamat aus $NH_3$ und $SO_3$ unter Druck.

In der folgenden Tabelle sind die Gehalte an Ammoniumsulfamat in der Schmelze in Abhängigkeit von Ammoniakpartialdruck und Temperaturschmelze für die Drucke von 6 bar und 11 bar angegeben.

Gehalt der Schmelze an Ammoniumsulfamat im Gleichgewicht (Gewicht-%)

| Temperatur | 11 bar $NH_3$ | 6 bar $NH_3$ |
|---|---|---|
| 200°C | 89,0 | 85,0 |
| 210 | 88,0 | 82,0 |
| 220 | 87,0 | 80,0 |
| 230 | 85,5 | 77,0 |
| 240 | 84,0 | 74,5 |
| 250 | 82,0 | 72,0 |
| 260 | 80,0 | 70,0 |

Der Temperaturbereich von 200 bis 220° in der Ammonolyse-Apparatur gestattet die vorteilhafte Verwendung von konventionellen emaillierten Reaktionsapparaten, während bei höheren Temperaturen Sonderwerkstoffe wie Titan oder (R) Hastelloy erforderlich werden. Zweckmäßigerweise werden für die Reaktion emaillierte Rührbehälter und Wärmeaustauscher eingesetzt. Ein mögliches Apparateschema ist in der DE-OS 2 738 709 dargestellt.

Aus dem so hergestellten Ammoniumsulfamat kann leicht mittels bekannter Verfahren (DE-PS 668 142) freie Amidosulfonsäure hergestellt werden.

Das Ammoniumsalz der Nitrilotrisulfonsäure läßt sich als Phosphatersatzstoff in Waschmitteln verwenden.

Die Erfindung wird durch das folgende Beispiel erläutert:

Beispiel 1

1. Versuchsapparatur

Ammoniumbissulfit-Lösung wird über Leitung (1) dem Kopf der Absorptionskolonne (2) zugeführt. Am unteren Ende der Kolonne wird über Leitung (3) ein gasförmiges Gemisch von NO und $NO_2$ in die Kolonne eingeführt. Die Kolonne ist mit Füllkörpern gefüllt, an denen herabströmende Sulfit-Lösung und aufsteigendes Gas miteinander in Kontakt treten. Das nach Absorption der Stickoxide zurückbleibende Restgas verläßt die Kolonne 2 am Kopf durch Leitung (4). Eine typische Analyse des Abgases zeigt Gehalte von unter 0,05 Volumenprozent $SO_2$ und NO, sowie weniger als 0,1 Volumenprozent $NH_3$. Der Gehalt an $NH_3$ im Abgas kann jedoch im Ausnahmefall auf 0,4 % steigen.

Am unteren Ende der Kolonne (2) wird durch Leitung (5) die teilweise umgesetzte Sulfit-Lauge abgezogen. Beim Anfahren der Anlage - wenn also die Lösung noch wenig Nitrilotrisulfonat enthält - wird die Lösung über das geöffnete Ventil (6) und die Leitung (7) zur Pumpe (8) geleitet. Von dort fließt die Lösung über Leitung (11) in den Kühler (12). Vorher werden durch Leitungen (9) und (10) Ammoniak und $SO_2$ in Leitung (11) eingepumpt um den Verbrauch an diesen Chemikalien in der Kolonne (2) zu kompensieren. Die abgekühlte Sulfit-Lösung wird über Leitung (1) wieder der Kolonne (2) zugeführt, wobei jedoch pH-Wert und Temperatur durch die Meßinstrumente (13) und (14) gemessen werden.

Sobald in Kolonne (2) der Nitrilotrisulfonat-Niederschlag aufzutreten beginnt, wird Ventil (6) geschlossen und Ventil (15) geöffnet. Die niederschlaghaltige Sulfit-Lösung fließt dann durch Leitung (16), Pumpe (17) und Leitung (18) zum Röhrenwärmeaustauscher (19), in dem die Temperatur weiter abgesenkt werden kann. Anschließend fließt die Lösung über Leitungen (20), (21) und (23), Ventil (27) und Leitung (7) zur Pumpe (8) zurück.

Durch den Röhrenwärmeaustauscher (19) wird die Temperatur der Bisulfitlösung soweit abgesenkt, daß in den Kristallisationsbehältern (24) und (25) das Ammoniumnitrilotrisulfonat ausfallen kann. Das sich am Boden dieser Gefäße ansammelnde Kristallisat (Ammonium-nitrilotrisulfonat) wird über die Ventile (26) und (22) abgezogen und über Nutschen (nicht gezeichnet) abgesaugt. Das Produkt kann nutschenfeucht (0,5 bis 2 % Wasser) weiterverarbeitet werden. In einem Luftstrom läßt sich das anhaftende Restwasser jedoch auf ca. 0,1 % vermindern. Sowohl das 98%ige als auch das fast 100%ige Produkt sind stabil, so daß der Weiterverarbeitung keine Schwierigkeiten im Wege stehen. Wenn das Produkt jedoch unmittelbar weiterverarbeitet wird, so kann der Wassergehalt sogar etwas höher sein.

0016430



2. Versuchsdurchführung

Die in der Abbildung dargestellte Apparatur wird mit ca. 190 l Ammoniumsulfit-Lösung (Dichte 1,176 und pH 8,2) gefüllt. Die Lösung wird umgepumpt und dabei durch die beiden Wärmeaustauscher auf die für die Kristallisation günstige Temperatur von 20°C gebracht. Gleichzeitig wird durch Eindrücken von Schwefeldioxid der pH-Wert auf etwa 6,7 vermindert.

In der Folge wird der pH-Wert durch Einleiten von $NH_3$ und $SO_2$ so einreguliert, daß er ständig zwischen 6,65 und 6,85 liegt.

Das durch Leitung (3) eingedrückte nitrose Gas enthält ca. 5 bis 7 % $NO_2$, 3 bis 6 % NO (Summe ca. 10 %) neben restlichem Stickstoff. Nach Beginn des Einleitens der nitrosen Gase beginnt in der Kolonne (2) die Temperatur etwas zu steigern. Nach 3 bis 5 Stunden beginnt die Lösung trüb zu werden. In den Kristallisatoren 24 und 25 mit je 80 l Inhalt scheiden sich die ersten Kristalle ab.

Innerhalb von 80 Stunden werden so 24 $m^3$ nitrose Gase 10,2 kg $SO_2$ und 2,5 kg $NH_3$ eingeleitet. Die Temperatur in den Kristallisatoren wird zwischen 18 und 25°C gehalten. Stündlich fallen ca. 170 g Ammonium-nitrilotrisulfonat und ca. 280 l Abgas an. Während 80 Stunden werden so 13,7 kg Trisulfonat und ca. 22,5 $m^3$ Abgas (im wesentlichen aus Stickstoff bestehend) erhalten. In der Lösung bleiben etwas über 18kg Nitrilotrisulfonat gelöst.
Ausbeute*: ca. 41 % d. Theorie (bezogen auf $N_2O_3$). Gehalt an Wasser ca. 1 %, an Disulfonat bis ca. 0.9 %, an Sulfamat unter 0.2 %.

* an festem Trisulfonat

Von dem erhaltenen Nitrilotrisulfonat werden 10 kg nutschenfeucht sofort der Ammonolyse unterworfen:

In einem 40 l Pfaudler-Rührautoklaven werden bei 150°C 15 kg eines technischen Ammoniumsulfamt-Gemisches mit folgender Zusammensetzung aufgeschmolzen:

80 % Ammoniumsulfamat
15 % Ammoniumimidodisulfonat
5 % Ammoniumsulfat

In die Schmelze werden bei 150°C unter Rühren 10 kg Ammonium-nitrilotrisulfonat eingetragen. Die erhaltene Suspension wird nunmehr bei einem $NH_3$-Druck von 9 bar unter langsamen Rühren auf 210°C aufgeheizt. Nach dem Erreichen der Reaktionstemperatur wird die Suspension bei einer Rührerdrehzahl von 375 U/min unter konstantem Druck von 9 bar 2 Stunden ammonolysiert. Danach wird die Schmelze auf 150°C abgekühlt und der Autoklav entspannt. Es werden 25,94 kg einer klaren Schmelze erhalten mit folgender Zusammensetzung:

81,1 % Ammoniumsulfamat
13,14 % Ammoniumimidosulfonat
5,7 % Ammoniumsulfat.

Ausbeute an Ammoniumsulfamat: ca. 81 % d. Theorie (bezogen auf Nitrilotrisulfonat)

PATENTANSPRÜCHE:

1. Verfahren zur Herstellung von Ammoniumsulfamat aus Ammoniak, Schwefeldioxid und $N_2O_3$, wobei man aus Ammoniak und Schwefeldioxid eine wässrige Ammoniumsulfit-Lösung mit einem pH-Wert zwischen 5 und 7,5 herstellt, man diese mit $N_2O_3$ zum Ammonium-Salz der Nitrilotrisulfonsäure umsetzt, das auch noch Ammoniumimidodisulfonat enthalten kann, man dieses Salz isoliert und dann mit Ammoniak bei erhöhter Temperatur und erhöhtem Druck zum Ammoniumsulfamat umsetzt, dadurch gekennzeichnet, daß die Umsetzung der Ammoniumsulfit-Lösung mit dem $N_2O_3$ bei Temperaturen unter 30°C erfolgt.

2. Verfahren nach Anspruch 1, dadurch gekennzeichnet, daß das isolierte Ammonium-nitrilotrisulfonat sofort zu Ammoniumsulfamat weiterverarbeitet wird.

3. Verfahren zur Herstellung von Ammoniumnitrilotrisulfonat aus Ammoniak, Schwefeldioxid und $N_2O_3$, wobei man aus Ammoniak und Schwefeldioxid eine Ammoniumsulfit-Lösung mit einem pH-Wert zwischen 5 und 7,5 herstellt, man diese mit $N_2O_3$ zum Ammonium-Salz der Nitrilotrisulfonsäure umsetzt, das auch noch Ammoniumimidodisulfonat enthalten kann und man dieses Salz isoliert, dadurch gekennzeichnet, daß die Umsetzung der Ammoniumsulfit-Lösung mit dem $N_2O_3$ bei Temperaturen unter 30°C erfolgt.

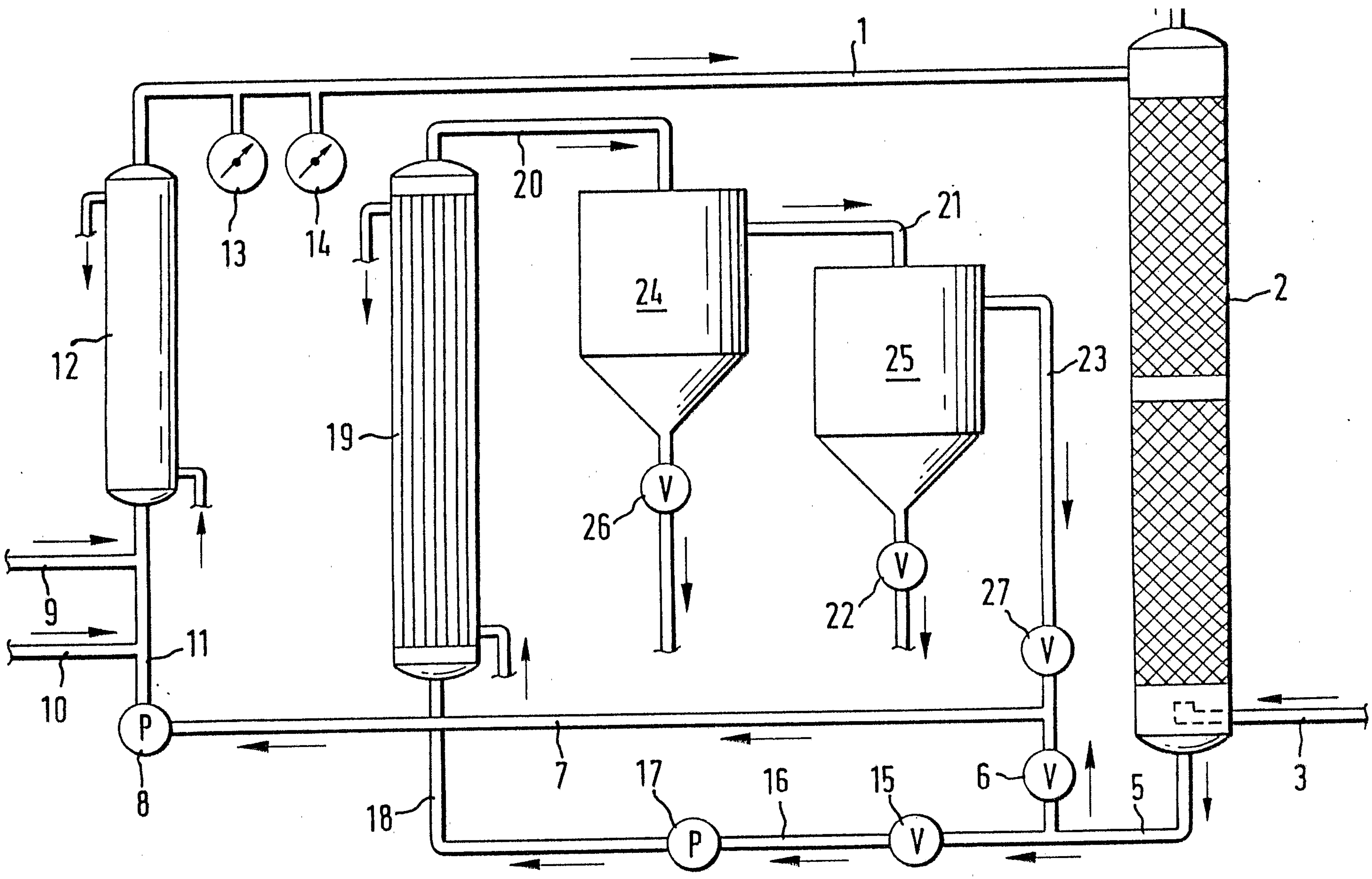

1
2
3
5
6
7
8
9
10
11
12
13
14
15
16
17
18
19
20
21
22
23
24
25
26
27
P
V

Europäisches Patentamt

# EUROPÄISCHER RECHERCHENBERICHT

Nummer der Anmeldung
EP 80 10 1336

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl. 3) |
|---|---|---|---|
| D | FR - A - 2 006 081 (FARBWERKE HOECHST AG)<br>* Seite 2, Zeilen 38-41; Anspruch 1 *<br>& DE - B - 1 767 201<br>-- | 1-3 | C 01 B 21/096 |
| DA | US - A - 3 404 949 (YUKIO ITO)<br>-- | | |
| A | CHEMICAL ABSTRACTS, Band 84, 1976, Seite 132, Zusammenfassung Nr. 124068g, Columbus, Ohio, US,<br>& JP - A - 75 83 300 (Agency of Industrial Sciences and Technology)(05.07.1975)<br>---- | | |

RECHERCHIERTE SACHGEBIETE (Int. Cl. 3)

C 01 B 21/06

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 13-05-1980 | ASSOGNA |